# EUROPÄISCHE PATENTSCHRIFT

(11) **EP 2 376 749 B1**
(45) Veröffentlichungstag und Bekanntmachung des Hinweises auf die Patenterteilung: **26.08.2015**
(21) Anmeldenummer: 10700698.3
(22) Anmeldetag: 11.01.2010
(51) Int. Cl.: F02B 37/00, F01N 3/20, F01N 9/00, F01N 3/023

(54) **VERFAHREN ZUM BETRIEB VON ABGASNACHBEHANDLUNGSKOMPONENTEN SOWIE ABGASNACHBEHANDLUNGSVORRICHTUNG**
METHOD FOR OPERATING FOR EXHAUST GAS AFTER-TREATMENT COMPONENTS AND EXHAUST GAS AFTER-TREATMENT DEVICE
PROCÉDÉ DE CONRÔLE DE COMPOSANTS POUR LE POST-TRAITEMENT DE GAZ D'ÉCHAPPEMENT ET DISPOSITIF DE POST-TRAITEMENT DE GAZ D'ÉCHAPPEMENT

(30) Priorität: 13.01.2009 DE 102009004416; 14.12.2009 EP 09015451
(43) Veröffentlichungstag der Anmeldung: 19.10.2011
(73) Patentinhaber: MAN Truck & Bus AG, 80995 München (DE)
(72) Erfinder: DÖRING, Andreas, 82008 München (DE)
(74) Vertreter: Liebl, Thomas
(86) Internationale Anmeldenummer: PCT/EP2010/000083
(87) Internationale Veröffentlichungsnummer: WO 2010/081665

(56) Entgegenhaltungen:
- DE-A1- 10 233 495
- DE-A1-102004 009 791
- FR-A1- 2 906 310
- JP-A- 10 121 939
- JP-A- 63 134 810

## Beschreibung

Die Erfindung betrifft ein Verfahren zum Betrieb von Komponenten zur Abgasnachbehandlung nach dem Oberbegriff des Anspruchs 1 sowie eine Vorrichtung zur Abgasnachbehandlung nach dem Oberbegriff des Anspruchs 10.

Aufgrund immer strengerer Abgasgrenzwerte, die nicht mehr allein durch motorische Maßnahmen zu erreichen sind, werden die meisten Brennkraftmaschinen inzwischen mit Nachbehandlungssystemen zur Verminderung der Schadstoffemissionen ausgerüstet. Neben Feststoffpartikeln gehören insbesondere auch die Stickoxide zu den limitierten Abgaskomponenten, die während der Verbrennungsvorgänge entstehen und deren erlaubte Emissionen fortlaufend abgesenkt werden. Zur Minimierung dieser Abgaskomponenten bei in Kraftfahrzeugen betriebenen Brennkraftmaschinen werden heute unterschiedliche Verfahren eingesetzt. Die Verminderung der Stickoxide geschieht in der Regel mithilfe von Katalysatoren, wobei in ein sauerstoffreiches Abgas zusätzlich ein Reduktionsmittel, insbesondere Kohlenwasserstoffe, Ammoniak oder Harnstoff, zudosiert wird, um die Selektivität und die NOₓ-Umsätze anzuheben. Das angewendete Verfahren wird als SCR-Verfahren bezeichnet, mit dem eine selektive katalytische Reduktion (SCR) durchgeführt wird. Demgegenüber dienen Drei-Wege-Katalysatoren der Stickoxidverminderung hinter Lambda-1-Motoren. Diese-Oxidationskatalysatoren sind für die Oxidation von unverbrannten Kohlenwasserstoffen und Kohlenmonoxid zuständig.

Zur Minimierung der Feinstoffpartikel werden in Fahrzeugen Partikelabscheider oder Partikelfilter eingesetzt. Eine für die Anwendung in Fahrzeugen typische Anordnung mit Partikelabscheider ist beispielsweise aus der EP 1 022 765 A1 bekannt. Eine Anordnung und ein Verfahren mit Partikelfilter ist dagegen aus der EP 0 341 832 A2 bekannt. In den beiden genannten Druckschriften ist jeweils stromauf zum Partikelabscheider beziehungsweise Partikelfilter ein Oxidationskatalysator angeordnet, der das Stickstoffmonoxid im Abgas mithilfe des ebenfalls enthaltenen Restsauerstoffs zu Stickstoffdioxid oxidiert:

2 NO + O₂ ↔ 2 NO₂

Dabei ist zu beachten, dass das Gleichgewicht der obigen Reaktion bei hohen Temperaturen auf der Seite von NO liegt. Dies hat wiederum zur Folge, dass die erzielbaren NO₂-Anteiie bei hohen Temperaturen aufgrund dieser thermodynamischen Begrenzung limitiert sind. Dieses NO₂ setzt sich wiederum im Partikelabscheider beziehungsweise im Partikelfilter mit den Kohlenstoffpartikeln zu CO, CO₂, N₂ und NO um. Mithilfe des starken Oxidationsmittels NO₂ erfolgt somit in allgemein bekannter Weise eine kontinuierliche Entfernung der angelagerten Feinstoffpartikel. Regenerationszyklen, wie sie aufwendig bei anderen Anordnungen durchgeführt werden müssen, können dadurch entfallen. Man spricht in diesem Fall daher von einer passiven Regeneration. Die Reaktionsgleichungen lauten wie folgt:

2NO₂ + C → 2NO + CO₂

2NO₂ + 2C → 2NO + 2CO

2C + 2NO₂ → N₂ + 2CO₂

Gelingt keine vollständige Oxidation des im Partikelfilter eingelagerten Kohlenstoffs mithilfe des NO₂, so steigen der Kohlenstoffanteil und damit der Abgasgegendruck stetig an. Um dies zu vermeiden, werden aktuell die Partikelfilter vermehrt mit einer katalytischen Beschichtung zur Oxidation von NO versehen. Dabei handelt es sich meist um platinhaltige Katalysatoren. Der Nachteil dieses Verfahrens besteht allerdings darin, dass das am Partikelfilter gebildete NO₂ nur zur Oxidation von Partikeln dienen kann, die stromab der katalytisch aktiven Schicht zur NO-Oxidation abgeschieden wurden, also innerhalb des Filtermediums. Bildet sich dagegen auf der Filteroberfläche und damit auf der katalytisch aktiven Schicht eine Schicht aus abgeschiedenen Partikeln, ein sogenannter Filterkuchen aus, so liegt der NO-Oxidationskatalysator stromab des Filterkuchens, so dass die dort abgeschiedenen Rußpartikel nicht mithilfe von NO₂ aus dem auf dem Partikelfilter aufgebrachten NO-Oxidationskatalysator oxidiert werden können. Hinzu kommt noch, das genau genommen, nur die auf der Rohgasseite aufgebrachte Katalysatorschicht zur Performance des Systems beiträgt, da das auf der Reingasseite katalytisch gebildete NO₂ nicht mehr in Kontakt mit dem auf der Rohgasseite und innerhalb des Filtermaterials abgeschiedenen Ruß kommen kann. Aus diesem Grund kann trotz der katalytischen Beschichtung des Filters nicht auf einen NO-Oxidationskatalysator vor dem Partikelfilter verzichtet werden, so dass sich ein relativ großes Bauvolumen ergibt.

Obwohl durch die oben beschriebenen Maßnahmen eine Rußoxidation noch bis zu Temperaturen von 250°C möglich ist, gibt es dennoch Anwendungsfälle, in denen selbst diese Abgastemperaturen nicht ausreichend oft erreicht werden und somit keine sichere Funktion des Partikelfilters sichergestellt werden kann. Dies tritt üblicherweise bei schwach belasteten und in Fahrzeugen verbauten Motoren, die noch zusätzliche hohe Leerlaufanteile aufweisen, wie beispielsweise bei Personenkraftwagen, Linienbussen oder Müllfahrzeugen, auf.

Daher wird speziell in solchen Fällen eine zweite Möglichkeit der Partikelfilterregeneration angewendet. Diese besteht darin, die Abgastemperatur aktiv anzuheben. Dies gelingt üblicherweise durch die Zugabe von Kohlenwasserstoffen (HC) stromauf von Oxidationskatalysatoren. Die Zugabe der Kohlenwasserstoffe kann durch eine im Abgastrakt angebrachte, separate Einspritzdüse erfolgen. Eine weitere Möglichkeit besteht darin, über eine späte Nacheinspritzung des Kraftstoffs in den Brennraum hohe Kohlenwasserstoffemissionen zu generieren. Durch die exotherme Oxidation der Kohlenwasserstoffe an den Katalysatoren kommt es dann zu einem deutlichen Temperaturanstieg. Gelingt dadurch eine Temperaturanhebung auf über 600°C, kommt es zu einer Oxidation des Kohlenstoffs mithilfe von Sauerstoff gemäß nachstehender Gleichung:

C + O₂ → CO₂

Die für die Abgastemperaturanhebung notwendige Oxidation der Kohlenwasserstoffe an den Katalysatoren findet bei Temperaturen um die 230°C statt. Allerdings besteht, insbesondere bei abgasaufgeladenen und schwach belasteten Motoren, das Problem, dass selbst diese Temperaturen stromab der Abgasturbine oft nicht mehr erreicht werden. Der Grund dafür liegt darin, dass dem Abgas erhebliche Mengen an Abgasenthalpie entzogen werden, um die Kompression auf der Frischluftseite zu ermöglichen. Dieses Problem wird beim Einsatz einer zweistufigen Aufladung und/oder sehr hohen Abgasrückführungsraten noch verstärkt.

Nicht nur die Verfahren zur Partikelverminderung, sondern auch die oben beschriebenen Verfahren zur Verminderung gasförmiger Schadstoffe, sind auf ausreichend hohe Abgastemperaturen angewiesen, die wie bereits beschrieben, im Normalbetrieb oft nicht erreicht werden.

Außerdem kommt beim Einsatz von Katalysatoren oft ein weiteres Problem hinzu: die Katalysatoren werden durch Abgasbestandteile, wie Schwefeloxide aus dem Kraftstoff- oder Motorenölschwefel, vergiftet. Diese Vergiftung ist zwar oft reversibel und kann durch hohe Abgastemperaturen rückgängig gemacht werden; doch auch hier stellt sich wieder das Problem, dass diese hohen Abgastemperaturen, speziell stromab von Abgasturboladern, nicht erreicht werden. So sind für die Regeneration von NO-Oxidationskatalysatoren mindestens 500°C notwendig, für NOₓ-Speicherkatalysatoren über 600°C.

Weiter ist aus der DE 199 13 462 A1 ein Verfahren zur thermischen Hydrolyse und Dosierung von Harnstoff beziehungsweise wässriger Harnstofflösung in einem Reaktor bekannt. Zur Erhöhung der Verweilzeit des Harnstoffes im Reaktor wird aus dem Abgasstrang ein Teilstrom entnommen und zur Bildung von Ammoniak im Reaktor herangezogen. Durch die geringere Abgasmenge im Teilstrom ist die Strömungsgeschwindigkeit im Reaktor gering und die Verweilzeit zur Umsetzung des Harnstoffes entsprechend groß. Der Teilstrom wird nach dem Reaktor wieder dem Abgasstrang zugemischt und das gebildete Ammoniak kann im nachgeschalteten SCR-Katalysator zur Reduktion von NOₓ herangezogen werden.

Weiter ist aus der DE 10 2006 038 291 A1 bereits eine Abzweigung eines Abgasteilstroms stromauf einer Abgasturbine bekannt, wobei dieser Abgasteilstrom stromab der Abgasturbine wieder mit dem Abgas-Hauptstrom vereinigt wird und anschließend als heißer Abgasstrom durch wenigstens eine Abgasnachbehandlungskomponente strömt. Ein vom Grundprinzip her ähnlicher Aufbau ist auch in der DE 10 2006 038 290 A1 und DE 10 2006 038 289 A1 beschrieben.

Aus der FR 2 906 310 A ist weiter ein Verfahren und eine Vorrichtung bekannt, bei der eine zwischen einer ersten und einer zweiten Abgasleitung angeordnete Turbine mittels einer als Waste-Gate ausgebildeten Bypassanordnung überbrückt werden kann. Stromab der Turbine ist ein Oxidationskatalysator und ein Partikelfilter angeordnet. Mittels einer Ventilanordnung wird vor einem Partikelfilter eine gewünschte Mindesttemperatur im Regenerationsbetrieb des Partikelfilters eingestellt. Hierzu ist eine entsprechende Steuerung vorgesehen.

Auch die DE 102 33 495 A1 zeigt die Möglichkeit, eine Abgasturbine mittels einer Bypassleitung zu überbrücken. Konkret soll hier der Abgasgegendruck reguliert werden.

Demgegenüber ist es Aufgabe der vorliegenden Erfindung, ein Verfahren zum Betrieb von Komponenten zur Abgasnachbehandlung sowie eine Abgasnachbehandlungsvorrichtung zur Verfügung zu stellen, mittels dem beziehungsweise mittels der in Verbindung mit einer Abgasturboladereinrichtung eine effiziente und effektive Aufheizung von einer Abgasturbine nachgeschalteten Abgasnachbehandlungskomponenten möglich wird.

Diese Aufgabe wird bezüglich des Verfahrens gelöst mit den Merkmalen des Anspruchs 1. Bezüglich der Vorrichtung wird diese Aufgabe gelöst mit den Merkmalen des Anspruchs 10. Weitere bevorzugte Ausgestaltungen sind Gegenstand der jeweils darauf rückbezogenen Unteransprüche.

Erfindungsgemäß wird stromauf wenigstens einer Abgasturbine ein Abgasteilstrom von einem Abgas-Hauptstrom entnommen, welcher Abgasteilstrom stromab der wenigstens einen Abgasturbine wieder in den Abgas-Hauptstrom zurückgeführt wird. Stromab dieser Zuführung ist wenigstens eine Abgasnachbehandlungskomponente angeordnet, wobei die als Abgasteilstrom abgezweigte Abgasmenge in Abhängigkeit von wenigstens einer Solltemperatur an wenigstens einer definierten Stelle im Abgastrakt, insbesondere im Abgasteilstrom und/oder an der wenigstens einen Abgasnachbehandlungskomponente, gesteuert oder geregelt wird. Die Rückführung des Abgasteilstroms erfolgt weiter erfindungsgemäß zwischen einem NO-Oxidationskatalysator und einem Partikelfilter. Dadurch gelingt es vorteilhaft, den Partikelfilter auf einem hohen Abgastemperaturniveau zu halten, ohne dass die NO₂-Anteile aufgrund zu hoher Temperaturen am NO-Oxidationskatalysator zurückgehen, und/oder den Rußabbrand zu beschleunigen, wenn ausreichende Mengen NO₂ zur Verfügung stehen, die Temperaturen am Partikelfilter aber zu gering sind.

Ein Grundgedanke der Erfindung besteht somit darin, stromauf mindestens einer Abgasturbine einen Abgasteilstrom zu entnehmen und diesen Abgasteilstrom stromab der mindestens einen Abgasturbine wieder dem Abgas-Hauptstrom zuzuführen, wodurch sichergestellt wird, dass sich der Abgasteilstrom auf einem deutlich höheren Temperaturniveau befindet als der durch die Abgasturbine strömende Abgas-Hauptstrom, so dass sich stromab der Zusammenführung der beiden Ströme eine höhere Abgastemperatur ergibt als dies der Fall wäre, wenn der gesamte Abgasstrom durch die Abgasturbine geführt wird. Da sich durch die Entnahme des Abgasteilstroms jedoch üblicherweise der Wirkungsgrad der Abgasturbine beziehungsweise die von ihr abzugebende Arbeit verringert, wird weiter erfindungsgemäß vorgeschlagen, die als Abgasteilstrom abgezweigte Abgasmenge in Abhängigkeit von wenigstens einer Solltemperatur im Abgasteilstrom und/oder an der wenigstens einen Abgasnachbehandlungskomponente zu steuern oder zu regeln, so dass die Wirkungsgradverluste der Abgasturbine optimiert werden können.

Hierzu bietet es sich weiter an, im Abgasteilstrom und/oder im Abgas-Hauptstrom wenigstens eine variable Drossel- und/oder Absperrvorrichtung vorzusehen, die es erlaubt, den an der Abgasturbine vorbeigeleiteten Abgasteilstrom sowohl auf bauteiltechnisch als auch steuerungsbeziehungsweise regelungstechnisch einfache Weise abzuzweigen. Ferner kann der Abgasteilstrom bei ausreichend hohen Abgastemperaturen stromab der Abgasturbine mit einer Drossel- und/oder Absperrvorrichtung einfachst gedrosselt oder aber auch ganz abgeschaltet werden. Wird ein Waste-Gate zum Schutz des Turboladers und/oder des Motors benötigt, bietet es sich an, die Bypassleitung für den Abgasteilstrom in Verbindung mit einer Drossel- und/oder Absperrvorrichtung als Waste-Gate zu verwenden. Geeignete Drossel- und/oder Absperrvorrichtungen und zum Beispiel Ventile, Schieber, Klappen oder dergleichen.

Zusätzlich oder aber auch alternativ dazu kann die als Abgasteilstrom entnommene Abgasmenge aber auch mittels einer variablen Turbinengeometrie (VTG) gesteuert oder geregelt werden, durch die der Fluss durch die Abgasturbine durch Drosselung des Hauptabgasstroms variiert werden kann.

Bevorzugt wird die Solltemperatur in Abhängigkeit von definierten Bauteil- und/oder Betriebsparametern der Brennkraftmaschine bzw. der Abgasnachbehandlungsvorrichtung vorgegeben, insbesondere in Abhängigkeit von der Art der wenigstens einen verwendeten Abgasnachbehandlungskomponente und/oder vom Soll-Schadstoffumsatz und/oder von der Höhe der Schadstoffemissionen vor und/oder nach der oder den Nachbehandlungskomponente(n) und/oder von der gesamten Abgasmenge und/oder von den in den Abgastrakt zugegebenen Mengen an Reduktionsmittel, insbesondere Kraftstoff und/oder Harnstoff, und/oder von der Abgasteilstrommenge und/oder von dem Abgas-Sauerstoffgehalt und/oder von den Betriebsstunden der Brennkraftmaschine bzw. der einzelnen Abgasnachbehandlungskomponenten und/oder vom Ist-Schadstoffumsatz und/oder von der Betriebsart der Brennkraftmaschine, insbesondere in Abhängigkeit von einem Normalbetrieb oder einem Regenerationsbetrieb der Brennkraftmaschine. So liegen beispielsweise die benötigten Abgastemperaturen im Regenerationsbetrieb deutlich über denen im Normalbetrieb, zum Beispiel bei der Desulfatisierung von Katalysatoren oder dem Freibrennen von Partikelfiltern. Die Vorgabe der jeweils benötigten Abgastemperatur beziehungsweise Solltemperatur erfolgt betriebspunktabhängig über eine durch eine Steuer- und/oder Regeleinrichtung gebildete elektronische Kontrolleinheit, insbesondere durch eine Motorsteuereinrichtung.

Um die jeweils benötigte Abgastemperatur beziehungsweise Solltemperatur für den jeweiligen Betriebspunkt vorzugeben, können von einer elektronischen Kontrolleinheit, wie z. B. der Motorsteuereinrichtung, die unterschiedlichsten Eingangsgrößen erfasst werden, zum Beispiel die aktuelle Abgastemperatur und/oder die aktuelle Temperatur einer Abgasnachbehandlungskomponente und/oder die angesaugte Luftmasse und/oder - der Soll-Schadstoffumsatz und/oder der Ist-Schadstoffumsatz und/oder die in den Abgastrakt zugegebnen Mengen an Reduktionsmittel, insbesondere Kraftstoff und/oder Harnstoff, und/oder die Höhe der Schadstoffemissionen vor und/oder nach der oder den Nachbehandlungskomponente(n) und/oder der Beladungszustand des Partikelfilters/-abscheiders und/oder der Abgasgegendruck und/oder der Ladedruck und/oder die zur Ansaugluftleitung gegebenenfalls rückgeführte Abgasmenge und/oder die als Teilabgasstrom abgezweigte Abgasmenge und/oder der Ladedruck und/oder eine Ladelufttemperatur und/oder eine Turboladerdrehzahl. Die aktuellen Abgastemperaturen können beispielsweise mit Hilfe von an geeigneten Stellen angeordneten Temperatursensoren erfasst werden. Alternativ oder zusätzlich dazu kann die aktuelle Abgastemperaturbestimmung aber auch über geeignete Modelle betriebspunktabhängig erfolgen. Solche Modelle können zum Beispiel in der elektronischen Kontrolleinheit abgelegte Kennlinien beziehungsweise Kennfelder aufweisen.

Reicht zum Beispiel eine, in einer Grundeinstellung als Abgasteilstrom abgezweigte Abgasmenge nicht aus, um die gewünschte Solltemperatur zu erzielen, kann der Haupt-Abgasstrom stromab der Teilstromentnahme und stromauf der Rückführstelle, insbesondere mit Hilfe einer VTG-Ladegruppe, so gedrosselt werden, dass eine noch größere Abgasmenge als Abgasteilstrom an der Turbine vorbeigeleitet wird. Genügen diese Drosselmaßnahmen, insbesondere im Regenerationsbetrieb, immer noch nicht, so ist es weiter zusätzlich möglich, definierte Betriebsparameter der Brennkraftmaschine zum Erreichen der Solltemperatur zu beeinflussen. Derartige definierte Betriebsparameter können zum Beispiel das Luft-/Kraftstoff-Verhältnis und/oder der Einspritzbeginn und/oder die Anzahl der Einspritzungen und/oder der Einspritzdruck und/oder die Menge des zur Ansaugluftleitung zurückgeführten Abgases (Abgasrückführungsrate) sein, die so verändert werden, dass die Abgastemperatur weiter ansteigt. Selbstverständlich können derartige Maßnahmen auch grundsätzlich bei bestimmten Betriebsarten der Brennkraftmaschine, beispielsweise im Regenerationsbetrieb, von vorneherein vorgesehen werden.

Der Abgasteilstrom kann grundsätzlich außerhalb des Abgastrakts geführt beziehungsweise angeordnet werden. Dies führt allerdings zu einer starken Auskühlung. Sinnvoller ist es daher, den Abgasteilstrom so im Abgastrakt anzuordnen, dass er vom Abgas des Hauptabgasstroms umströmt wird. Dadurch lassen sich Wärmeverluste vorteilhaft verringern.

Zusätzlich kann im abgezweigten Abgasteilstrom und/oder im den Hauptabgasstrom führenden Abgasteilstück zwischen der Abgasturbine und der Rückführung des Abgasteilstroms mindestens ein Katalysator angeordnet sein, wodurch vorteilhaft Bauraum eingespart werden kann.

Die erfindungsgemäße Vorrichtung zur Abgasnachbehandlung umfasst wenigstens eine von der Brennkraftmaschine zur Abgasturbine geführte Abgasleitung sowie eine von der Abgasturbine wegführende Turbinen-Abführleitung. Stromauf der Abgasturbine zweigt von wenigstens einer der Abgasleitungen eine Bypassleitung ab, die stromab der Abgasturbine an einer Zuführung in die Turbinen-Abführleitung einmündet. Die Bypassleitung mündet zwischen einem NO-Oxidationskatalysator und einem Partikelfilter in die Turbinen-Abführleitung ein, was zu den bereits vorstehend in Verbindung mit der erfindungsgemäßen Verfahrensführung genannten Vorteilen führt. Die erfindungsgemäße Vorrichtung umfasst weiter eine elektronische Kontrolleinheit, insbesondere eine Motorsteuereinrichtung, als Steuer- und/oder Regeleinrichtung, mittels der die über die Bypassleitung geführte Abgasmenge in Abhängigkeit von wenigstens einer Solltemperatur im Abgasteilstrom und/oder an der wenigstens einen Abgasnachbehandlungskomponente steuerbar oder regelbar ist. Bei den Abgasnachbehandlungskomponenten handelt es sich bevorzugt um Katalysatoren und/oder Partikelfilter und/oder Partikelabscheider. Als Katalysatoren kommen z. B. bevorzugt Drei-Wege-Katalysatoren und/oder SCR-Katalysatoren und/oder Diesel-Oxidationskatalysatoren und/oder NO_{X}-Speicherkatalysatoren und/oder NO-Oxidationskatalysatoren in Frage.

Die Erfindung wird nachfolgend anhand einer Zeichnung näher erläutert.

Es zeigen:
- Fig. 1: eine schematische Darstellung einer nicht-erfindungsgemäßen Ausführungsvariante, und,
- Fig. 2: eine schematische Darstellung einer erfindungsgemäßen Ausführungsvariante.

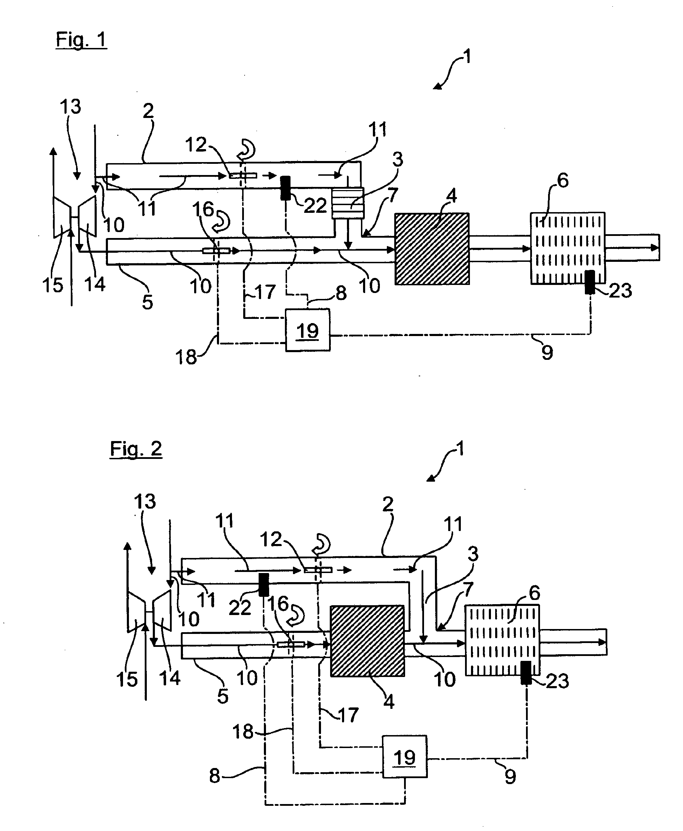

In der Fig. 1 ist eine nicht-erfindungsgemäße Ausführungsform einer Abgasnachbehandlungsvorrichtung dargestellt, bei der der von der nicht dargestellten Brennkraftmaschine kommende Abgasstrom stromauf der Abgasturbine 14 eines Abgasturboladers 13 in einen Haupt-Abgasstrom 10, der über die Abgasturbine 14 geführt ist und über diese einen Luftverdichter 15 antreibt, und einen Abgasteilstrom 11 aufgezweigt wird. Dieser Abgasteilstrom 11 wird stromab der Abgasturbine 14 mittels einer Bypassleitung 2, die stromab der Abgasturbine 14 an einer Zuführung 7 in eine von der Abgasturbine 14 wegführende Turbinen-Abführleitung 5 einmündet, wieder mit dem Haupt-Abgasstrom 10 vereinigt.

In der Darstellung der Fig. 1 ist hier beispielhaft sowohl in der Bypassleitung 2 als auch in der Turbinen-Abführleitung 5 jeweils eine variable Drossel- und/oder Absperrvorrichtung 12 beziehungsweise 16 angeordnet, die über hier lediglich schematisch und strichpunktiert dargestellte Steuerleitungen 17, 18 mit einer elektronischen Kontrolleinheit, insbesondere einer Motorsteuereinheit, 19 verbunden sind.

In der Bypassleitung 2 ist hier optional ein zum Beispiel Kohlenwasserstoffe oxidierender Oxidationskatalysator 3 angeordnet, während stromab der Zuführung 7 ein NO-Oxidationskatalysator 4 vorgesehen ist, dem ein Partikelfilter 6 nachgeschaltet ist.

Lediglich beispielhaft und schematisch zur prinzipiellen Verdeutlichung ist hier sowohl im Abgasteilstrom 11 als auch am Partikelfilter 6 jeweils ein Temperatursensor 22, 23 angeordnet, die die jeweils aktuelle Temperatur im Abgasteilstrom 11 und am Partikelfilter 6 erfassen und über die Steuerleitungen 8, 9 der elektronischen Kontrolleinheit 19 als Eingangsgrößen zuführen.

Wird nunmehr in einem periodischen Regenerationsbetrieb das Erfordernis des Freibrennens des Partikelfilters 6 von der Motorsteuereinrichtung 19 erkannt beziehungsweise erfasst, so steuert die Motorsteuereinrichtung 19 die hier beispielhaft zwei Drossel- und/oder Absperrvorrichtungen 12, 16 so an, dass eine definierte Abgasmenge als Abgasteilstrom 11 vom zur Abgasturbine 14 geführten Abgasstrom abgezweigt wird und sich die für die Partikelfilterregeneration erforderliche Solltemperatur im Abgasteilstrom 11 und/oder am Partikelfilter 6 als Solltemperatur einstellt. Damit wird auf zuverlässige und optimierte sowie steuerungs- und regelungstechnisch einfache Weise eine stets solche optimale Abgastemperatur im Abgastrakt der Brennkraftmaschine eingestellt, dass die hier beispielhaft gewählte Partikelfilterregeneration in optimaler Weise durchgeführt werden kann.

Der Oxidationskatalysator 3 dient hierbei insbesondere dazu, im Abgasteilstrom 11 eine weitere exotherme Reaktion unter Schadstoffreduzierung durchzuführen. Auf den Oxidationskatalysator 3 kann aber auch verzichtet werden, wie dies bei der erfindungsgemäßen Ausgestaltung nach der Fig. 2 der Fall ist, bei der der Abgasteilstrom 11 im Unterschied zur Ausgestaltung nach Fig. 1 stromab des NO-Oxidationskatalysators 4 zugeführt wird, wodurch sichergestellt werden kann, dass der stromab der Zuführung 7 angeordnete Partikelfilter 6, im Gegensatz zur nicht-erfindungsgemäßen Ausführungsform nach der Fig. 1, auf einem höheren Temperaturniveau als der NO-Oxidationskatalysator 4 betrieben werden kann. Dadurch gelingt es, den Partikelfilter 6 auf einem hohen Abgastemperaturniveau zu halten, ohne dass die am NO-Oxidationskatalysator 4 gebildete NO₂-Menge aufgrund zu hoher Temperaturen am NO-Oxidationskatalysator 4 zurückgehen, beziehungsweise gelingt es, den Rußabbrand zu beschleunigen, wenn ausreichende Mengen NO₂ zur Verfügung stehen, die Temperaturen am Partikelfilter 6 aber zu gering sein sollten.

Ansonsten entsprechen der Aufbau und die Funktionsweise derjenigen der Abgasnachbehandlungsvorrichtung gemäß Fig. 1.

## Patentansprüche

1. Verfahren zum Betrieb von Komponenten zur Abgasnachbehandlung, die im Abgastrakt einer abgasaufgeladenen Brennkraftmaschine angeordnet sind, wobei
- stromauf wenigstens einer Abgasturbine ein Abgasteilstrom von einem Abgas-Hauptstrom entnommen wird,
- der Abgasteilstrom stromab der wenigstens einen Abgasturbine wieder in den Abgas-Hauptstrom zurückgeführt wird,
- stromab dieser Zuführung wenigstens eine Abgasnachbehandlungskomponente angeordnet ist,
und wobei die als Abgasteilstrom (11) abgezweigte Abgasmenge in Abhängigkeit von wenigstens einer Solltemperatur an wenigstens einer definierten Stelle im Abgastrakt, insbesondere im Abgasteilstrom (11) und/oder an der wenigstens einen Abgasnachbehandlungskomponente (6), gesteuert oder geregelt wird,
**dadurch gekennzeichnet,**
**dass** der Abgasteilstrom (11) strömungstechnisch zwischen einem NO-Oxidationskatalysator (4) und einem Partikelfilter (6) zurückgeführt wird.

2. Verfahren nach Anspruch 1, **dadurch gekennzeichnet, dass** die als Abgasteilstrom (11) abgezweigte Abgasmenge mit Hilfe wenigstens einer variablen Drossel- und/oder Absperrvorrichtung (12, 16) und/oder mit Hilfe einer variablen Turbinengeometrie (VTG) gesteuert oder geregelt wird.

3. Verfahren nach Anspruch 2, **dadurch gekennzeichnet, dass** die wenigstens eine variable Drossel- und/oder Absperrvorrichtung (12, 16) im Abgas-Hauptstrom (10) und/oder im Abgasteilstrom (11) angeordnet ist.

4. Verfahren nach Anspruch 2 oder 3, **dadurch gekennzeichnet, dass** die wenigstens eine variable Drossel- und/oder Absperrvorrichtung (12, 16) und/oder die variable Turbinengeometrie mittels einer elektronischen Kontrolleinheit (19), insbesondere einer Motorsteuereinrichtung, zur Einstellung einer für einen definierten Betriebspunkt vorgegebenen Solltemperatur in Abhängigkeit von definierten Bauteil- und/oder Betriebsparametern angesteuert wird.

5. Verfahren nach einem der Ansprüche 1 bis 4, **dadurch gekennzeichnet, dass** die Solltemperatur von einer elektronischen Kontrolleinheit (19), insbesondere einer Motorsteuereinrichtung, für definierte Betriebsparameter der Brennkraftmaschine und/oder der Abgasnachbehandlungsvorrichtung in Abhängigkeit von der Art der wenigstens einen Abgasnachbehandlungskomponente (6) und/oder von einem Soll-Schadstoffumsatz und/oder von einem Ist-Schadstoffumsatz und/oder von der Höhe der Schadstoffemissionen vor und/oder nach der oder den Nachbehandlungskomponente(n) und/oder von den in den Abgastrakt zugegebenen Mengen an Reduktionsmittel, insbesondere Kraftstoff und/oder Harnstoff, und/oder von der Abgasmenge insgesamt und/oder von der Abgasteilstrommenge und/oder von dem Abgas-Sauerstoffgehalt und/oder von den Betriebsstunden der Brennkraftmaschine und/oder von den Betriebsstunden wenigstens einer Abgasnachbehandlungskomponente (6) und/oder von der Betriebsart der Brennkraftmaschine, insbesondere in Abhängigkeit von einem Normalbetrieb oder einem Regenerationsbetrieb der Brennkraftmaschine, vorgegeben wird.

6. Verfahren nach einem der Ansprüche 1 bis 5, **dadurch gekennzeichnet, dass** einer elektronischen Kontrolleinheit (19), insbesondere einer Motorsteuereinrichtung, zur betriebspunktabhängigen Vorgabe einer Solltemperatur die aktuelle Abgastemperatur und/oder eine aktuell erfasste Temperatur wenigstens einer Abgasnachbehandlungskomponente (6) und/oder der Soll-Schadstoffumsatz und/oder der Ist-Schadstoffumsatz und/oder die Höhe der Schadstoffemissionen vor und/oder nach der oder den Nachbehandlungskomponente(n) und/oder der Beladungszustand des Partikelfilters/-abscheiders und/oder der Abgasgegendruck und/oder der Ladedruck und/oder eine angesaugte Luftmasse und/oder die in den Abgastrakt zugegebenen Mengen an Reduktionsmittel, insbesondere Kraftstoff und/oder Harnstoff, und/oder eine zur Ansaugluftleitung rückgeführte Abgasmenge und/oder eine als Abgasteilstrom abgezweigte Abgasmenge und/oder ein Ladedruck und/oder eine Ladelufttemperatur und/oder eine Turboladerdrehzahl als Eingangsgröße zugeführt wird.

7. Verfahren nach einem der Ansprüche 1 bis 6, **dadurch gekennzeichnet, dass** zum Erreichen der Solltemperatur wenigstens ein definierter Betriebsparameter der Brennkraftmaschine, insbesondere das Luft-/Kraftstoff-Verhältnis und/oder der Einspritzbeginn und/oder die Anzahl der Einspritzungen und/oder der Einspritzdruck und/oder die Menge des zur Ansaugluftleitung zurückgeführten Abgases verändert wird.

8. Verfahren nach einem der Ansprüche 1 bis 7, **dadurch gekennzeichnet, dass** der Abgasteilstrom (11) wenigstens teilweise vom Abgas-Hauptstrom (10) umströmt wird oder beabstandet außerhalb desselben geführt wird.

9. Verfahren nach einem der Ansprüche 2 bis 8, **dadurch gekennzeichnet, dass** eine im Abgasteilstrom (11) angeordnete Drossel- und/oder Absperrvorrichtung (12) mittels einer Motorsteuereinrichtung als Waste-Gate ansteuerbar ist.

10. Vorrichtung zur Abgasnachbehandlung eines Abgasstroms einer Brennkraftmaschine, insbesondere zur Durchführung eines Verfahrens nach einem der vorhergehenden Verfahrensansprüche,
- mit wenigstens einer von der Brennkraftmaschine zur Abgasturbine (14) geführten Abgasleitung,
- mit einer von der Abgasturbine (14) wegführenden Turbinen-Abführleitung (5),
- mit einer stromauf der Abgasturbine (14) von wenigstens einer Abgasleitung abzweigenden Bypassleitung (2), die stromab der Abgasturbine (14) an einer Zuführung (7) in die Turbinen-Abführleitung (5) einmündet,
- mit wenigstens einer stromab der Zuführung (7) angeordneten Abgasnachbehandlungskomponente (6), und
- mit einer elektronischen Kontrolleinheit (19), insbesondere einer Motorsteuereinrichtung, als Steuer- und/oder Regeleinrichtung, mittels der die als Abgasteilstrom (11) über die Bypassleitung (2) geführte Abgasmenge in Abhängigkeit von wenigstens einer Solltemperatur an wenigstens einer definierten Stelle im Abgastrakt, insbesondere im Abgasteilstrom (11) und/oder an der wenigstens einen Abgasnachbehandlungskomponente (6), steuerbar oder regelbar ist,
**dadurch gekennzeichnet,**
**dass** die Bypassleitung (2) zwischen einem NO-Oxidationskatalysator (4) und einem Partikelfilter (6) in die Turbinen-Abführleitung (5) einmündet.

## Claims

1. Method for operating components for exhaust-gas aftertreatment, which components are arranged in the exhaust tract of an exhaust gas-turbocharged internal combustion engine, wherein
- an exhaust-gas partial flow is extracted from an exhaust-gas main flow upstream of at least one exhaust-gas turbine,
- the exhaust-gas partial flow is conducted back into the exhaust-gas main flow again downstream of the at least one exhaust-gas turbine,
- at least one exhaust-gas aftertreatment component is arranged downstream of said supply point,
and wherein the exhaust-gas flow rate branched off as an exhaust-gas partial flow (11) is controlled or regulated in a manner dependent on at least one target temperature at at least one defined location in the exhaust tract, in particular in the exhaust-gas partial flow (11) and/or at the at least one exhaust-gas aftertreatment component (6),
**characterized**
**in that** the exhaust-gas partial flow (11) is conducted back in between an NO oxidation catalytic converter (4) and a particle filter (6) in terms of flow.

2. Method according to Claim 1, **characterized in that** the exhaust-gas flow rate branched off as an exhaust-gas partial flow (11) is controlled or regulated by way of at least one variable throttle and/or shut-off apparatus (12, 16) and/or by way of a variable turbine geometry (VTG).

3. Method according to Claim 2, **characterized in that** the at least one variable throttle and/or shut-off apparatus (12, 16) is arranged in the exhaust-gas main flow (10) and/or in the exhaust-gas partial flow (11).

4. Method according to Claim 2 or 3, **characterized in that** the at least one variable throttle and/or shut-off apparatus (12, 16) and/or the variable turbine geometry is controlled by way of an electronic control unit (19), in particular an engine control device, in order to set a target temperature, which is predefined for a defined operating point, in a manner dependent on defined component and/or operating parameters.

5. Method according to one of Claims 1 to 4, **characterized in that** the target temperature is predefined by an electronic control unit (19), in particular an engine control device, for defined operating parameters of the internal combustion engine and/or of the exhaust-gas aftertreatment apparatus in a manner dependent on the type of the at least one exhaust-gas aftertreatment component (6) and/or on a target pollutant conversion rate and/or on an actual pollutant conversion rate and/or on the level of the pollutant emissions upstream and/or downstream of the one or more aftertreatment component(s) and/or on the amounts of reducing agent, in particular fuel and/or urea, metered into the exhaust tract and/or on the overall exhaust-gas flow rate and/or on the exhaust-gas partial flow rate and/or on the exhaust-gas oxygen content and/or on the operating duration of the internal combustion engine and/or on the operating duration of at least one exhaust-gas aftertreatment component (6) and/or on the operating mode of the internal combustion engine, in particular in a manner dependent on a normal operating mode or a regeneration operating mode of the internal combustion engine.

6. Method according to one of Claims 1 to 5, **characterized in that**, for the predefining of a target temperature in a manner dependent on the operating point, an electronic control unit (19), in particular an engine control device, has the following supplied to it as input variables: the present exhaust-gas temperature and/or a presently detected temperature of at least one exhaust-gas aftertreatment component (6) and/or the target pollutant conversion rate and/or the actual pollutant conversion rate and/or the level of the pollutant emissions upstream and/or downstream of the one or more exhaust-gas aftertreatment component(s) and/or the state of load of the particle filter/separator and/or the exhaust-gas back pressure and/or the charge pressure and/or an inducted air mass and/or the amounts of reducing agent, in particular fuel and/or urea, metered into the exhaust tract and/or an exhaust-gas flow rate conducted back into the intake air line and/or an exhaust-gas flow rate branched off as exhaust-gas partial flow and/or a charge pressure and/or a charge-air temperature and/or a turbocharger rotational speed.

7. Method according to one of Claims 1 to 6, **characterized in that**, to attain the target temperature, at least one defined operating parameter of the internal combustion engine, in particular the air/fuel ratio and/or the start of injection and/or the number of injections and/or the injection pressure and/or the flow rate of the exhaust gas conducted back to the intake air line, is varied.

8. Method according to one of Claims 1 to 7, **characterized in that** the exhaust-gas partial flow (11) is at least partially flowed around by the exhaust-gas main flow (10) or is conducted outside the latter with a spacing.

9. Method according to one of Claims 2 to 8, **characterized in that** a throttle and/or shut-off apparatus (12) arranged in the exhaust-gas partial flow (11) can be controlled as a wastegate by means of an engine control device.

10. Apparatus for the exhaust-gas aftertreatment of an exhaust-gas flow of an internal combustion engine, in particular for carrying out a method according to one of the preceding method claims,
- having at least one exhaust line leading from the internal combustion engine to the exhaust-gas turbine (14),
- having a turbine discharge line (5) leading away from the exhaust-gas turbine (14),
- having a bypass line (2) which branches off from at least one exhaust line upstream of the exhaust-gas turbine (14) and which, downstream of the exhaust-gas turbine (14), opens into the turbine discharge line (5) at a supply point (7),
- having at least one exhaust-gas aftertreatment component (6) arranged downstream of the supply point (7), and
- having an electronic control unit (19), in particular an engine control device, as control and/or regulating device, by means of which electric control unit the exhaust-gas flow rate conducted as an exhaust-gas partial flow (11) via the bypass line (2) can be controlled or regulated in a manner dependent on at least one target temperature at at least one defined location in the exhaust tract, in particular in the exhaust-gas partial flow (11) and/or at the at least one exhaust-gas aftertreatment component (6),
**characterized**
**in that** the bypass line (2) opens into the turbine discharge line (5) between an NO oxidation catalytic converter (4) and a particle filter (6).

## Revendications

1. Procédé de contrôle de composants pour le post-traitement de gaz d'échappement, qui sont disposés dans la ligne de gaz d'échappement d'un moteur à combustion interne suralimenté par des gaz d'échappement, dans lequel
- on prélève en amont d'au moins une turbine à gaz d'échappement un courant partiel de gaz d'échappement dans un courant principal de gaz d'échappement,
- on renvoie le courant partiel de gaz d'échappement en aval de ladite au moins une turbine à gaz d'échappement dans le courant principal de gaz d'échappement,
- on dispose en aval de ce branchement au moins un composant de post-traitement de gaz d'échappement,
et dans lequel on commande ou on régule le débit de gaz d'échappement dérivé sous forme de courant partiel de gaz d'échappement (11) en fonction d'au moins une température de consigne en au moins un endroit défini dans la ligne de gaz d'échappement, en particulier dans le courant partiel de gaz d'échappement (11) et/ou audit au moins un composant de post-traitement de gaz d'échappement (6),
**caractérisé en ce que** l'on renvoie le courant partiel de gaz d'échappement (11) conformément à la technique des fluides entre un catalyseur d'oxydation des NOx (4) et un filtre à particules (6).

2. Procédé selon la revendication 1, **caractérisé en ce que** l'on commande ou on régule le débit de gaz d'échappement dérivé sous forme de courant partiel de gaz d'échappement (11) à l'aide d'au moins un dispositif variable d'étranglement et/ou d'arrêt (12, 16) et/ou à l'aide d'une géométrie de turbine variable (VTG).

3. Procédé selon la revendication 2, **caractérisé en ce que** ledit au moins un dispositif variable d'étranglement et/ou d'arrêt (12, 16) est disposé dans le courant principal de gaz d'échappement (10) et/ou dans le courant partiel de gaz d'échappement (11).

4. Procédé selon la revendication 2 ou 3, **caractérisé en ce que** l'on commande ledit au moins un dispositif variable d'étranglement et/ou d'arrêt (12, 16) et/ou la géométrie de turbine variable au moyen d'une unité de contrôle électronique (19), en particulier un dispositif de commande de moteur, pour le réglage d'une température de consigne prédéterminée pour un point de fonctionnement défini, en fonction de paramètres définis des composants et/ou du fonctionnement.

5. Procédé selon l'une quelconque des revendications 1 à 4, **caractérisé en ce que** la température de consigne est prédéterminée par une unité de contrôle électronique (19), en particulier un dispositif de commande de moteur, pour des paramètres de fonctionnement définis du moteur à combustion interne et/ou du dispositif de post-traitement des gaz d'échappement en fonction de la nature dudit au moins un composant de post-traitement des gaz d'échappement (6) et/ou d'une conversion de consigne des polluants et/ou d'une conversion réelle des polluants et/ou de la hauteur des émissions de polluants avant et/ou après le ou les composant(s) de post-traitement des gaz d'échappement et/ou des quantités d'agent réducteur, en particulier de carburant et/ou d'urée, ajoutées dans la ligne des gaz d'échappement, et/ou du débit de gaz d'échappement au total et/ou du débit du courant partiel de gaz d'échappement et/ou de la teneur en oxygène des gaz d'échappement et/ou des heures de fonctionnement du moteur à combustion interne et/ou des heures de fonctionnement d'au moins un composant de post-traitement des gaz d'échappement (6) et/ou du mode de fonctionnement du moteur à combustion interne, en particulier en fonction d'un fonctionnement normal ou d'un fonctionnement de régénération du moteur à combustion interne.

6. Procédé selon l'une quelconque des revendications 1 à 5, **caractérisé en ce que** l'on envoie à une unité de contrôle électronique (19), en particulier un dispositif de commande de moteur, pour la prédiction d'une température de consigne en fonction du point de fonctionnement, la température actuelle des gaz d'échappement et/ou une température actuellement détectée d'au moins un composant de post-traitement des gaz d'échappement (6) et/ou la conversion de consigne des polluants et/ou la conversion réelle des polluants et/ou la hauteur des émissions de polluants avant et/ou après le ou les composant(s) de post-traitement des gaz d'échappement et/ou l'état de charge du filtre/séparateur à particules et/ou la contrepression des gaz d'échappement et/ou la pression de suralimentation et/ou la quantité d'air aspirée et/ou les quantités d'agent réducteur, en particulier de carburant et/ou d'urée, ajoutées dans la ligne des gaz d'échappement, et/ou une quantité de gaz d'échappement renvoyée à la conduite d'air d'aspiration et/ou un débit de gaz d'échappement dérivé sous forme de courant partiel de gaz d'échappement et/ou une pression de suralimentation et/ou une température de l'air de suralimentation et/ou une vitesse de rotation du turbocompresseur, comme grandeur d'entrée.

7. Procédé selon l'une quelconque des revendications 1 à 6, **caractérisé en ce que**, pour atteindre la température de consigne, on fait varier au moins un paramètre de fonctionnement défini du moteur à combustion interne, en particulier le rapport air/carburant et/ou le début de l'injection et/ou le nombre d'injections et/ou la pression d'injection et/ou la quantité des gaz d'échappement renvoyée dans la conduite d'air d'aspiration.

8. Procédé selon l'une quelconque des revendications 1 à 7, **caractérisé en ce que** l'on dérive le courant partiel de gaz d'échappement (11) au moins en partie hors du courant principal de gaz d'échappement (10) ou on le conduit à distance à l'extérieur de celui-ci.

9. Procédé selon l'une quelconque des revendications 2 à 8, **caractérisé en ce qu'**un dispositif d'étranglement et/ou d'arrêt (12) disposé dans le courant partiel de gaz d'échappement (11) peut être commandé au moyen d'un dispositif de commande de moteur comme wastegate.

10. Dispositif pour la post-traitement des gaz d'échappement d'un courant de gaz d'échappement d'un moteur à combustion interne, en particulier pour la mise en oeuvre d'un procédé selon l'une quelconque des revendications précédentes,
- avec au moins une conduite de gaz d'échappement menée depuis le moteur à combustion interne jusqu'à la turbine à gaz d'échappement (14),
- avec une conduite d'évacuation de turbine (5) partant de la turbine à gaz d'échappement (14),
- avec une conduite de dérivation (2) dérivée d'au moins une conduite de gaz d'échappement en amont de la turbine à gaz d'échappement (14), qui débouche en aval de la turbine à gaz d'échappement (14) à un branchement (7) dans la conduite d'évacuation de turbine (5),
- avec au moins un composant de post-traitement des gaz d'échappement (6) disposé en aval du branchement (7), et
- avec une unité de contrôle électronique (19), en particulier un dispositif de commande de moteur, comme dispositif de commande et/ou de régulation, au moyen duquel le débit de gaz d'échappement mené par la conduite de dérivation (2) comme courant partiel de gaz d'échappement (11) peut être commandé ou régulé en fonction d'au moins une température de consigne en au moins un endroit défini dans la ligne des gaz d'échappement, en particulier dans le courant partiel de gaz d'échappement (11), et/ou audit au moins un composant de post-traitement de gaz d'échappement (6),
**caractérisé en ce que** la conduite de dérivation (2) débouche dans la conduite d'évacuation de turbine (5) entre un catalyseur d'oxydation des NOx (4) et un filtre à particules (6).
